(19) Europäisches Patentamt
European Patent Office
Office européen des brevets

(11) Publication number: **0 682 284 A2**

(12) # EUROPEAN PATENT APPLICATION

(21) Application number: **95106897.2**

(51) Int. Cl.6: **G02F 1/15**, G02F 1/155

(22) Date of filing: **08.05.95**

(30) Priority: **09.05.94 JP 95226/94**
**12.10.94 JP 246263/94**

(43) Date of publication of application:
**15.11.95 Bulletin 95/46**

(84) Designated Contracting States:
**DE FR GB**

(71) Applicant: **Tonen Corporation**
**1-1 Hitotsubashi, 1-Chome**
**Chiyoda-Ku**
**Tokyo 100 (JP)**

(72) Inventor: **Koseki, Keiichi, c/o Tonen Corp.**
**Corp. Res. & Dev.**
**Lab.,**
**3-1, Nishi-tsurugaoka 1-chome**
**Ohi-machi,**
**Iruma-gun,**
**Saitama-ken (JP)**

Inventor: **Shimizu, Natsuko, c/o Tonen Corp.**
**Corp. Res. & Dev**
**Lab.,**
**3-1, Nishi-tsurugaoka 1-chome**
**Ohi-machi,**
**Iruma-gun,**
**Saitama-ken (JP)**

Inventor: **Demizu, Yuzo, c/o Tonen Corp.**
**Corp. Res. & Dev**
**Lab.,**
**3-1, Nishi-tsurugaoka 1-chome**
**Ohi-machi,**
**Iruma-gun,**
**Saitama-ken (JP)**

(74) Representative: **KUHNEN, WACKER & PARTNER**
**Alois-Steinecker-Strasse 22**
**D-85354 Freising (DE)**

(54) **Electrochromic device.**

(57) It is provided an electrochromic device having excellent coloring properties, being operable at a lower voltage and having a lower haze ratio, by using an electrolyte solution composed of a viologen derivative and a specific alcohol solvent as one component of the device, or by using an electrolyte film produced by immersing or immobilizing the solution into a porous film as one component of the device. It is furthermore provided an electrochromic device having improved operation life and stability to operate at a lower temperature and comprising an electrolyte placed between a pair of electrodes, wherein the electrolyte is in the form of an electrolyte solution prepared by dissolving a viologen derivative in an organic solvent or wherein the electrolyte is in the form of an electrolyte film prepared by immersing and immobilizing the solution into a porous film, characterized in that an oxide layer of a transition metal selected from the group consisting of chromium, manganese, cobalt and nickel is placed between a single electrode of the aforementioned electrodes and the electrolyte solution of the electrolyte film.

Fig.1

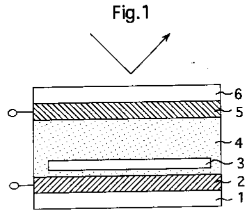


EP 0 682 284 A2

## BACKGROUND OF THE INVENTION

### 1. FIELD OF THE INVENTION

The present invention relates to an electrochromic device. More specifically, the present invention relates to an electrochromic device using a viologen derivative and a specific organic solvent, particularly to an electrochromic device wherein a layer of a transition metal oxide is placed between the electrode of the electrochromic device and the electrolyte thereof.

### 2. DESCRIPTION OF THE RELATED ART

Attention has been focused on a device to which is applied the electrochromic (sometimes abbreviated as "EC" hereinafter) phenomenon where the color of a substance is reversibly modified depending on the voltage. Electrochromic device (sometimes abbreviated as "ECD" hereinafter) is characterized by its clear and readily visible display of a large area and its capability of memory (with less power consumption). It has been proposed that such characteristic properties may be applied to large displays such as those for stock value, message board and guide plate and dim devices including anti-glare shield mirror and dim glass used in window for automobiles, and sunglasses.

The typical structure of ECD is as follows. An electrolyte is placed between an electrochromic electrode ($WO_3$) and its counter electrode, and when a voltage is applied to the two electrodes, $WO_3$ is subjected to cathodic reduction by the ions from the electrolyte and the electrons from an electric power supply, so that coloring is induced. It is known that if an EC material colorable by oxidation and decolorable by reduction is then used as the material of the counter electrode, so-called complementary device colorable at the two electrodes can be constructed, resulting in the improvement of coloring efficiency.

Research works have been done about aqueous solutions of viologen derivatives as the liquid electrolyte, and it has been also disclosed that a device produced by placing a viologen derivative dissolved in a solid electrolyte of polymer polyethylene oxide between a working electrode and its counter electrode can be used as ECD.

When aqueous solutions of viologen derivatives are used as electrolytes as has been described above, however, the applied voltage of 2 to 3 V is not suitable because the electrolytes are in the form of aqueous solutions (water electrolysis is induced);
additionally, ECD produced by dissolving a viologen derivative in a solid electrolyte of polymer polyethylene oxide has a lower film strength involving difficulty to design a device of a large area because solid polymer polyethylene oxide is used therein;
still furthermore, because the operating voltage of such ECD is as high as 10V and because the ECD is produced by thermal polymerization or photopolymerization, such reaction slightly proceeds therein after the fabrication of a device, leading to ready deterioration of the device, problematically.

On the other hand, organic solvents of viologens have been investigated, but the decrease in transmittance and haze ratio can not be achieved in organic solvents conventionally proposed. In addition, the operation at lower voltages as well as the operation durability (cycle properties) is not satisfactory; it has been remarked furthermore that when the device is designed for the use of anti-glare mirror and dim glass, the operation life (cycle properties) and stability to operate at lower temperatures have not yet been satisfactory; further, the use thereof for a long period may cause residual coloring during decoloring, problematically.

## SUMMARY OF THE INVENTION

By overcoming all problems occurring when an aqueous solution of a viologen derivative is used, when a solid electrolyte of polymer polyethylene oxide is used and when an organic solvent conventionally proposed is used, an objective of the present invention is to provide an electrochromic device operable at a lower voltage and having a higher operation durability, concurrently achieving the decrease in transmittance and haze ratio.

Furthermore, a second objective of the present invention is to provide an electrochromic device with improved operation life and stability to operate at a lower temperature.

Still furthermore, a third objective of the present invention is to provide an electrochromic device preferable as anti-glare mirror and dim device.

Furthermore, a fourth objective of the present invention is to provide an electrochromic device having excellent mechanical strength and chemical stability.

So as to achieve the above-described objectives, the present inventors have made various investigations. Consequently, focussing their attention to an alcohol solvent compatible with a viologen derivative electrolyte, the inventors have found that an electrochromic device having a lower haze ratio, being operable at a lower voltage and having higher operation durability, can be provided by using the alcohol solvent as an electrolyte solution or by using the solution in the form of an electrolyte film after the solution is immersed and immobilized into a porous film.

Also, the present inventors have found that an electrochromic device with improved operation life and stability to operate at a lower temperature in addition to a lower operation voltage and a lower haze ratio can be provided by placing a layer of a transition metal oxide between an electrode and an electrolyte. The present invention has been achieved on the basis of these findings.

In accordance with the present invention, thus, it is provided an electrochromic device comprising an electrolyte placed between a pair of electrodes, wherein the electrolyte is in the form of an electrolyte solution prepared by dissolving N, N'-substituted 4, 4'-bipyridyl (sometimes abbreviated as "viologen derivative" hereinafter) represented by the following general formula [I];

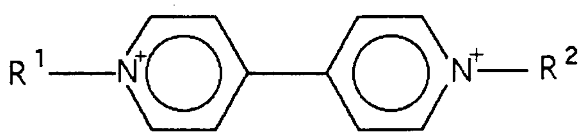

[I]

(wherein $R_1$ and $R_2$ may be the same or different and are at least one hydrocarbon-containing group, independently selected) in a solvent selected from the solvent group consisting of a solvent containing at least one compound represented by the general formula [II];

$HO(CH_2CH_2O)_nR^3$ [II]

(wherein $R^3$ is hydrogen atom or a hydrocarbon group; and n is an integer of 1 to 3) and a solvent containing at least one compound represented by the general formula [III];

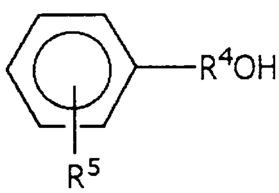

[III]

(wherein $R^4$ is $R^6$ or $OR^6$; $R^5$ is hydrogen atom, $R^6$ or $OR^6$; and $R^6$ is a linear alkylene group or a branched alkylene group), or wherein the electrolyte is in the form of an electrolyte film prepared by immersing and immobilizing the solution into a porous film.

Also, it is provided an electrochromic device comprising an electrolyte placed between a pair of electrodes, wherein the electrolyte is in the form of an electrolyte solution prepared by dissolving N, N'-substituted 4, 4'-bipyridyl represented by the following general formula [I];

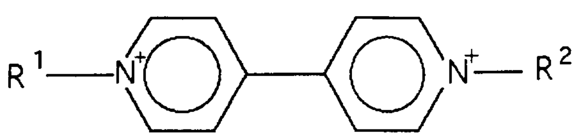

[I]

(wherein $R^1$ and $R^2$ may be the same or different and are at least one hydrocarbon-containing group, independently selected) in an organic solvent or wherein the electrolyte is in the form of an electrolyte film prepared by immersing and immobilizing the solution into a porous film, characterized in that an oxide layer of a transition metal selected from the group consisting of chromium, manganese, cobalt and nickel is placed between a single electrode of the aforementioned electrodes and the electrolyte.

The following electrochromic devices are provided as preferred embodiments of the present invention. Specifically,

1. an electrochromic device is provided, using as the organic solvent at least one alcohol represented by the following general formula [II];

$HO(CH_2CH_2O)_nR^3$ [II]

least one alcohol represented by the general formula [III]; (wherein $R^3$ is hydrogen atom or a hydrocarbon group; and n is an integer of 1 to 3); and

2. an electrochromic device is provided, using as the organic solvent at least one alcohol represented by the general formula (III);

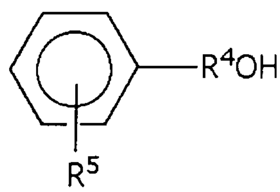

[III]

(wherein $R^4$ is $R^6$ or $OR^6$; $R^5$ is hydrogen atom, $R^6$ or $OR^6$; and $R^6$ is a linear alkylene group or a branched alkylene group); and

3. an electrochromic device is provided, wherein $R^1$ and $R^2$ are the same and $R^1$ and $R^2$ each area linear alkyl group or a branched alkyl group with 1 to 8 carbon atoms in the general formula [I] and $R^3$ is an alkyl group with 1 to 4 carbon atoms in the general formula [II], and wherein nickel oxide as the oxide layer of a transition metal is placed between the electrode and the electrolyte.

## BRIEF DESCRIPTION OF THE DRAWINGS

Fig.1 is a cross sectional view schematically depicting a display device using the electrochromic device of the present invention;

Fig.2 is a cross sectional view schematically depicting a transmission-type dim device;

Fig.3 is a cross sectional view schematically depicting a anti-glare mirror using the electrochromic device of the present invention; and

Fig.4 is a cross sectional view schematically depicting a dim glass using the electrochromic device of the present invention.

## DETAILED DESCRIPTION OF THE INVENTION

The reductive coloring of a viologen derivative is used in he ECD of the present invention. Viologen derivatives as derivatives of 4,4'-bipyridine are compounds of redox type as the oxidation type is colorless while the reduction type is blue or purple, and are represented by the general formula [I];

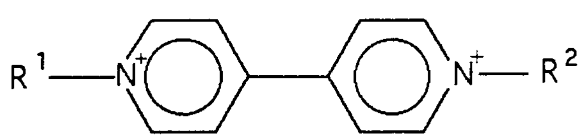

[I]

In the general formula [I] $R^1$ and $R^2$ may be the same or different and are at least one hydrocarbon-containing group, independently selected. Preferable hydrocarbon-containing group is selected from the group consisting of a group containing an aliphatic hydrocarbon and a group containing an aromatic hydrocarbon. It is preferable that $R^1$ and $R^2$ are the same. The group containing an aliphatic hydrocarbon includes a linear alkyl group or a branched alkyl group, preferably a linear alkyl group or a branched alkyl group with 1 to 8 carbon atoms, for example, methyl group, ethyl group, propyl group, butyl group, pentyl group, hexyl group, heptyl group, octyl group and the isomers thereof and the like. From the respect of providing operation durability, furthermore, preferable alkyl groups are butyl group, pentyl group, hexyl group and heptyl group. Preference is given to n-heptyl group in particular.

The aromatic hydrocarbon containing group includes phenyl group, benzyl group or such groups at an optional position substituted with halogen atom, cyano group or an alkyl group with 1 to 4 carbon atoms, and more preferably includes phenyl group, benzyl group and 4-cyanophenyl group.

Specifically preferable compounds include pentyl viologen and heptylviologen. More specifically, a methylated derivative of 4,4'-bipyridine or a benzylated derivative thereof are illustrated, including for example the following compounds. These viologen derivatives are advantageous in that they can realize multi colors if the type of the derivatives is selected.

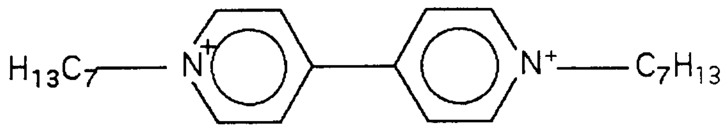

(blue purple)

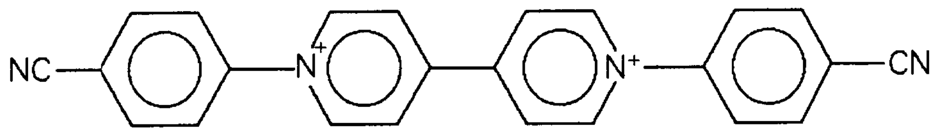

(green)

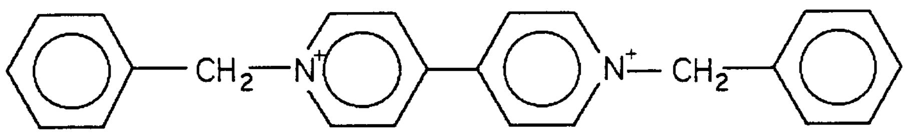

(purple)

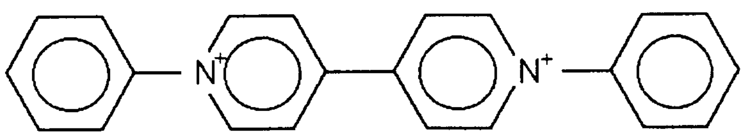

(black purple)

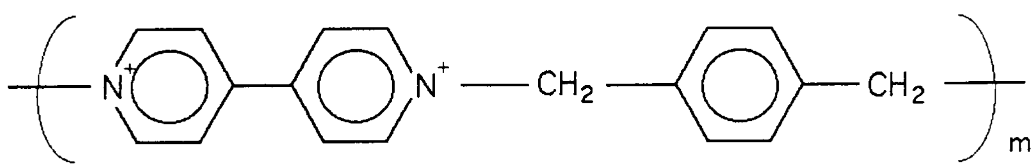

(blue)

The electrolyte solution can be prepared by dissolving such viologen derivatives in an organic solvent. The organic solvent is not specifically limited as far as the coloring properties of the viologen derivatives can be realized, but preferably includes at least one compound represented by the following general formula [II];

$HO(CH_2CH_2O)_nR^3$ [II]

In the aforementioned general formula [II], $R^3$ is a hydrocarbon group; and n is an integer of 1 to 3. The above-described hydrocarbon group includes a linear- or branched alkyl group with 1 to 10 carbon atoms; an aryl group, an alkylaryl group and an arylalkyl group, having 6 to 15 carbon atoms and the like. Preferable hydrocarbon group is for example a linear alkyl group with 1 to 4 carbon atoms, namely methyl group, ethyl group, propyl group, butyl group and the isomers thereof. In accordance with the present invention, thus, preferable compounds include 2-methoxyethanol, 2-ethoxyethanol, 2-propoxyethanol, 2-butoxyethanol, diethylene glycol monomethyl ether, diethylene glycol monoethyl ether, diethylene glycol monopropyl ether, diethylene glycol monobutyl ether and the like. Specifically preferable compounds are 2-methoxyethanol and 2-ethoxyethanol.

The above-described viologen derivatives may be dissolved in a solvent containing at least one compound represented by the following general formula [III];

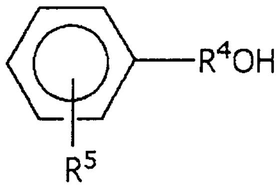

[III]

instead of the compound represented by the aforementioned general formula [II].

In the general formula [III], $R^4$ is $R^6$ or $OR^6$; $R^5$ is hydrogen atom, $R^6$ or $OR^6$; and $R^6$ is a linear alkylene group or a branched alkylene group. The alkylene group has 1 to 10 carbon atoms, and is preferably a lower alkylene group with 1 to 6 carbon atoms.

The preferable compounds represented by the general formula [III] are those with $R^5$ being hydrogen atom and $R^6$ of $R^4$ being a linear alkylene group, specifically a lower alkylene group (methylene, ethylene, propylene, butene, pentene, and hexene); more specifically, preference is given to one or more selected from benzyl alcohol ($R^4$ = $CH_2$), 2-phenylethanol ($R^4$ = $C_2H_4$), 3-phenyl-1-propanol ($R^4$ = $C_3H_6$), 4-phenyl-1-butanol ($R^4$ = $C_4H_8$), 5-phenyl-1-pentanol($R^4$ = $C_5H_{10}$),6-phenyl-hexanol ($R^4$ = $C_6H_{12}$), phenoxymethanol ($R^4$ = $OCH_2$), 2-phenoxyethanol ($R^4$ = $OC_2H_4$), and 3-phenoxypropanol ($R^4$ = $OC_3H_6$). Specifically, preference is given to 2-phenylethanol ($R^4$ = $C_2H_4$) and 2-phenoxyethanol ($R^4$ = $OC_2H_4$) or the mixtures of the two.

The content of viologen derivatives in a solvent containing a compound represented by the general formulas [II] or [III] is 1 % by weight (referred to as "wt %" hereinafter) to 35 wt % , more preferably 4 wt % to 30 wt % to the total weight of the electrolyte solution. If the content is below 1 wt %, the transmittance of the coloring side is not sufficiently lowered during coloring and decoloring operation, disadvantageously; if the content is above 35 wt %, the derivatives are not readily dissolved in a solvent or color readily remains, disadvantageously. The content of viologen derivatives in a range of 4 wt % to 30 wt % is most preferable, because the transmittance during coloring and decoloring operation is 10 % or less and the solubility of the viologen derivatives is high.

The electrolyte solution prepared in the above-described manner may contain an electrophilic reagent if necessary, as is described in the Specification of Japanese Patent Application No. 95170/1994. By the addition of an electrophilic reagent, the electrolyte solution may acquire excellent cycle properties in a wide range of transmittance change (7 % to 70 %). This is believed to be due to the fact that an electrophilic reagent may suppress the deterioration in cycle properties because of the dimerization of viologen derivatives.

As such electrophilic reagent, preference is given to a Louis acid, more specifically to a Brønsted acid releasing protons, particularly to mineral acids including sulfuric acid, hydrochloric acid and nitric acid. Most preferable electrophilic reagent is nitric acid.

An electrophilic reagent should be added generally at 0.05 wt % to 2 wt %, preferably at 0.08 wt % to 1 wt % to the total weight of the electrolyte solution. If the amount of the electrophilic reagent is below the range, desired effects cannot be brought about; if the amount is above the range, alternatively, the decrease in transmittance during coloring of the electrolyte viologen derivative is insufficient.

In accordance with the present invention, a film of an electrolyte can be prepared, by preparing an electrolyte solution produced by dissolving N, N'-substituted bipyridyl in a mixture containing at least one compound represented by the general formula [II] and a compound with a higher refractive index than that of the compound or by dissolving the bipyridyl in a solvent containing at least one compound represented by the general formula [III] and then filling the resulting electrolyte solution in the pores of the solid polymer porous film as described in Japanese Patent Laid-open No. 67227/1991. These solvents have refractive indices in a range of 1.45 to 1.53 which are close to general refractive indices of porous polymer films, i.e. 1.49 to 1.53, so that the haze ratio of the film after immersion and immobilization is effectively lowered. As the solvent to be mixed with at least one compound represented by the general formula [II], those with higher refractive indices than the index of the compound are illustrated without specific limitation, including aromatic nitrile, for example, diphenylpropionitrile. The electrolyte film has a strength as a solid polymer porous film, so that the film can be thinned and fabricated into large area.

As a solid polymer porous film as a raw material of the electrolyte film, preferably, use may be made of a solid polymer porous film having a film thickness of 0.1 µm to 50 µm, a pore atio of 40 % to 90 %, a break strength of 200 kg/cm$^2$ or more, and an average penetration diameter of 0.01 µm to 0.7 µm.

The film thickness is generally 0.1 µm to 50 µm, preferably 1.0 µm to 25 µm. If the thickness is below 0.1 µm, the film may be used in practice with much difficulty from the respect of the decrease in

mechanical strength and the handling as a supporting film. When the thickness is above 50 μm, alternatively, the film is not preferable from the respect that effective resistance should be suppressed low. The pore ratio of the porous film is preferably at 40 % to 90 %, preferably in a range of 60 % to 90%. If the pore ratio is below 40 %, the ion conductivity is insufficient as an electrolyte; if the pore ratio is above 90 %, the mechanical strength as a supporting film gets so low that the film can be used practically only with much difficulty.

An average penetration diameter should be a size which can immobilize ion electrical conductors into pores, and may be generally 0.01 μm to 0.7 μm. Preferable average penetration diameter may depend on the material and pore shape of the polymer film. The break strength of the polymer film is generally 200 $kg/cm^2$ or more, more preferably 500 $kg/cm^2$ or more, so that the film is preferably used in practice as a supporting film.

The porous film to be used in accordance with the present invention is composed of a polymer material, which has the function as a supporting body of ion electric conductors and has excellent mechanical strength as described above.

From the respect of chemical stability, use may be made of for example polyolefin, polytetrafluoroethylene, and polyvinylidene fluoride. From the respect that the porous structure of the present invention should be designed and thinned concurrently with the establishment of mechanical structure, one example of preferable such polymer materials is polyolefin of a weight average molecular weight of $5 \times 10^5$ or more. In other words, the polyolefin should be a crystallizable linear polyolefin in the form of a single polymer of olefin or a copolymer thereof, and should have a weight average molecular weight of $5 \times 10^5$ or more, preferably $1 \times 10^6$ to $1 \times 10^7$, including for example polyethylene, polypropylene, ethylenepropylene copolymer, polybutene-1, and poly (4-methylpentene-1). Among them, preference is given to polyethylene or polypropylene, having a weight average molecular weight of $5 \times 10^5$ or more. The weight average molecular weight of polyolefin has effects on the mechanical strength of the resulting transmittable film. From polyolefin of an ultra-high molecular weight, it can be prepared an ultra-thin film of a high strength through ultra-elongation, which can be prepared subsequently into a supporting body of a highly ion conductive film of a low effective resistance. Polyolefin of a weight average molecular weight of $5 \times 10^5$ or less may be used simultaneously, but a system without containing polyolefin of a weight average molecular weight of $5 \times 10^5$ or more cannot produce an ultra-thin film of a high strength by ultra-elongation.

The porous film as described above may be prepared by the following method. In a solvent such as fluid paraffin was dissolved 1 wt % to 15 wt % of polyolefin of an ultra-high molecular weight under heating, for preparing a homogeneous solution. Sheet was prepared from the resulting solution, and was rapidly cooled to prepare sheet in the form of gel. Using a volatile solvent such as methylene chloride, the solvent contained in the sheet in the form of gel was extracted to a final solvent content of 10 wt % to 90 wt %. The sheet in the form of gel was heated at a temperature below the melting point of the polyolefin, and was then elongated by 10 fold or more by area magnification. The solvent contained in the elongated film was extracted and removed with a volatile solvent such as methylene chloride, followed by drying.

Another preferable example of such polymer materials is polycarbonate, and in this case, a solid polymer porous film may be prepared by irradiating a polycarbonate film with charged particles in a nuclear reactor and subjecting the track of passed charged particles to alkali etching to prepare pores. Such film is on the market as polycarbonate and polyester products, for example "Nuclepore Membrane".

Additionally, use may be made of polyester, polymethacrylate, polyacetal, polyvinylidene chloride, tetrafluoropolyethylene and the like.

As the method for filling ion electric conductors into the polymer film, the following methods may be used;

1. a method comprising dissolving a viologen derivative in a solvent or finely dispersing a viologen derivative in the form of sol or gel into a solvent, immersing, coating or spraying the resulting derivative into or onto) a solid polymer porous film, and removing the solvent;
2. a method comprising preparing a solution of a viologen derivative or a dispersion of the derivative in the form of sol or gel, mixing together the solution or the dispersion and fabricating the mixture into film;
3. a method comprising immersing, coating or spraying the monomer or soluble precursor of a viologen derivative into (or onto) a solid polymer porous film, and reacting them together in the pores, and the like.

So as to construct ECD using the electrolyte film as described above, the electrolyte film is snapped between a transparent conductive electrode and its counter electrode. The transparent conductive electrode includes $SnO_2$, ITO and the like, while as the counter electrode, use may be made of an electrode which can develop color by oxidation, such as those composed of NiO, $IrO_x$ and Prussian Blue or of an electrode which does not develop any color by redox reaction.

Viologen derivatives develop color when the derivatives receive electrons from the ITO electrode for reduction. When a too high voltage is then applied, the ITO itself is reduced so that a voltage below 3 V is preferable.

When an electrochromic device is prepared by using an electrolyte solution produced by dissolving a viologen derivative in an organic solvent containing the compounds represented by the general formulas [II]- and [III] in accordance with the present invention, the device can be operated at a low voltage of about 2.5 V while retaining the excellent coloring properties of viologen derivatives. Furthermore, the device has excellent operation durability and a low haze ratio, and also has a wide variety of transmittance change (7 % to 80 %).

When a layer of a specific transition metal oxide is placed between an electrode and the electrolyte solution or the lectrolyte film in the ECD using such viologen derivative, additionally, the operation life (cycle properties) can be improved along with the improvement of the stability to operate at a low temperature while the excellent coloring properties of the viologen derivatives can be maintained.

In the ECD of the present invention, an EC layer comprising an oxide of a transition metal selected from the group consisting of chromium, manganese, cobalt and nickel, is placed on an electrode. However, other EC materials may be used as well, if the materials can release and receive charges required for coloring and decoloring reactions and if the materials are transparent during the decoloring of the viologen derivatives. For the ECD of the present invention, nickel oxide (NiO) may most preferably be used because the charge thereof per unit area during decoloring is large and because the phototransmittance during decoloring and the coloring efficiency during coloring are high.

The transition metal oxide to be used in accordance with the present invention may be laminated on an electrode, preferably by vacuum deposition or by sputtering. The thickness of the transition metal oxide is generally 0.1 $\mu$m to 1.0 $\mu$m. If the thickness of the transition metal oxide is below 0.1 $\mu$m, the current required for the receipt of charges during coloring and decolaring reactions is extremely less; when the current is above 1.0 $\mu$m, alternatively, coloring is distinctive (residual coloring). Neither case should be used in practice. Preferable thickness of the transition metal oxide is 0.3 $\mu$m to 0.6 $\mu$m.

As the electrode on which the transition metal oxide is laminated, any transparent conductive film known in the art maybe used. Preferable materials for such transparent conductive film may include indium tin oxide (ITO) and tin oxide ($SnO_2$). By laminating the transparent conductive film generally on glass or other transparent substrate and preferably by vacuum deposition, a transparent film electrode is prepared. The thickness of the transparent film electrode should be selected appropriately, depending on the use, but generally, the thickness may be in a range of 0.1 $\mu$m to 0.8 $\mu$m, preferably in a range of 0.1 $\mu$m to 0.2 $\mu$m.

Examples of preparing the fundamental electrochromic device of the present invention will now be described hereinbelow with reference to drawings. Then, explanation will follow about examples of preparing an electrochromic device of the structure where a layer of a transition metal oxide is placed between an electrode and an electrolyte.

Figure 1 shows an example of the EC display device. In the am nation structure, there are arranged from below glass plate 1, counter electrode 2, backboard 3, solid electrolyte film 4, transparent conductive film 5 and glass plate 6.

As the display device is in the reflection mode, the glass plate 1 is not necessarily a transparent plate, but may be a resin plate. For the counter electrode 2, use may be made of an electron conductive material with less generation of hydrogen and oxygen, good reversibility of electrochemical redox reaction, and a large electric capacity. Specifically, the material is illustrated by carbon, a complex material of a transition metal with carbon and the like. The thickness of the counter electrode 2 is about 0.1 $\mu$m to 10 $\mu$m.

The backboard 3 is generally a white backboard, and use may be made of for example a sheet produced by kneading alumina powder with a binder and subsequently molding the mixture. The counter electrode 2 may serve a role as the backboard 3.

The solid electrolyte film 4 is produced, for example, by immersing an electrolyte solution dissolving the specific solvent described above and a viologen derivative into the pore of a polymer porous film, and the film has a thickness of 4 $\mu$m to 20 $\mu$m and an ion conductivity of 1.5 to 2.5 x $10^{-4}$ S/cm.

The transparent conductive film 5 is a collector electrode being composed of indium tin oxide (ITO) or tin oxide and having a thickness of 0.1 $\mu$m to 0.2 $\mu$m, which is formed on the glass plate 6.

The voltage applied between the transparent conductive film 5 and the counter electrode 2 may be about 2.5 V. If a too high voltage is then applied, ITO is reduced, disadvantageously.

Because the electrolyte is immobilized in the polymer film in the EC device thus prepared and the device therefore can be handled practically as a solid film, the device may be fabricated into a simple structure and readily handled during the fabrication without possible liquid leak even after damage after the fabrication. Therefore, no special care is needed as in the case of liquid electrolytes.

The structure in Figure 2 is different from the structure in Figure 1, in that $IrO_x$ is used for counter electrode 13 as described above, and that the electrode has a thickness of 0.05 µm to 0.2 µm and is light transmitting.

In the structure in Figure 1, backboard 3 is light non-transmittable, while counter electrode 2 may be either light non-transmittable or light transmittable. In the structure of Figure 2, by applying a voltage between conductive films 12, 15 when the conductive film 15 is at a negative voltage, a dim glass (EC window) is proposed. Herein, if counter electrode 13 is patterned in the structure, the structure may be used also as a transmittable display device.

Then, description will be made of examples of preparing an electrochromic device of a structure wherein a layer of a transition metal oxide is placed between an electrode and an electrolyte.

In Figure 3, description will be made of one example of anti-glare mirror using the ECD of the present invention. In the laminated structure, there are arranged from below silver mirror 10, glass plate 20, transparent film electrode 30, electrolyte 40, transition metal oxide layer 50, transparent film electrode 60 and glass plate 70. It is needless to say that the order of the electrolyte 40 and the transition metal oxide layer 50 can be exchanged with each other. A person skilled in the art may appropriately select the type and thickness of the silver mirror 0 and the glass plates 20, 70, depending on the use.

The electrolyte 40 may be the electrolyte solution or the electrolyte film as described above, but because the electrolyte is immobilized into the polymer film in the latter, the latter can be practically handled as a solid film and easily handled during the fabrication, without possible liquid leak during the break after the fabrication. Therefore, the latter is more convenient than the electrolyte solution in liquid.

The ECD (anti-glare mirror) of Figure 3 is colored when a voltage of 1 V to 3 V is applied between transparent film electrode 30 as a negative electrode and transparent film electrode 60 for several seconds, and the ECD decreases reflection light which is reflected on the silver mirror. So as to decolor the colored ECD, an inverse voltage (about 1 V to 3 V in the same manner) is applied between the transparent film electrodes 30, 60 for several ten seconds.

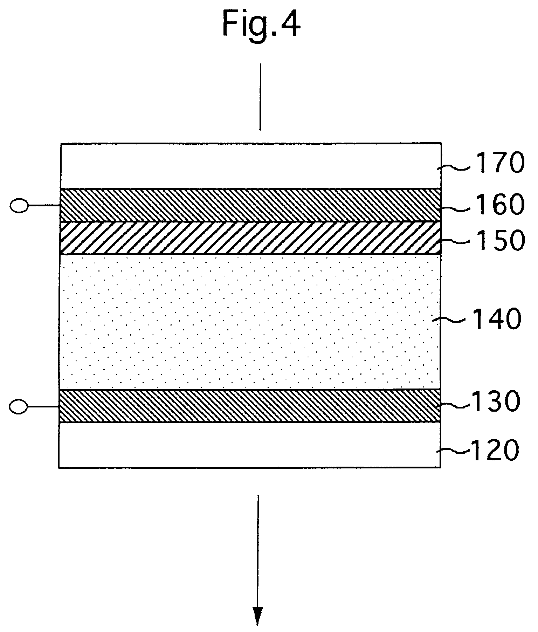

Figure 4 depicts one example of dim glass (EC window) using the ECD of the present invention. In the lamination structure, there are arranged from below glass plate 120, transparent film electrode 130, electrolyte 140, transition metal oxide layer 150, transparent film electrode 160 and glass plate 170. As in Figure 3, a person skilled in the art may appropriately select the type and thickness of the glass plates 120, 170, depending on the use.

The structure in Figure 4 is colored when a voltage of about 1 V to 3 V is applied between the transparent film electrode 130 as a negative electrode and the transparent film electrode 160 for several seconds, so that light transmitting through the ECD decreases. So as to decolor the colored ECD, an inverse voltage (about 1 V to 3 V in the same manner) should be applied between the transparent film electrodes 130, 160 for several ten seconds.

## EXAMPLE

The present invention will now be explained in details in examples.

### Example 1

(Preparation of electrolyte solution)

2-Methoxyethanol (10 g) was weighed in a beaker, to which were added heptyl viologen and nitric acid (of special grade) for sufficient mixing and agitation with a stirrer, to prepare a viologen electrolyte solution of 10 wt % of heptyl viologen and 0.1 wt % of nitric acid of special grade.

(Fabrication of electrochromic device)

Two glass substrates of 40 mm square were prepared; on a single side of a glass substrate was deposited ITO film of a 0.16 µm thickness by vacuum deposition. On a single side of the ther glass substrate was deposited ITO film of a 0.16 µm thickness in the same manner, and then, a silver mirror was arranged on the other side thereof. Between the two glass substrates placed so that their ITO sides might face each other were inserted spacers at an interval of 25 µm, and their circumference was sealed with a UV-curing adhesive to prepare a cell. Then, an opening was made at a single portion as an inlet of the solution.

Using a vacuum chamber, the entire cell was suctioned in vacuum below 500 Pa, and the cell was then immersed in an electrolyte solution to pour the solution into the cell at room temperature. After pouring, the opening was again sealed with the UV-curing adhesive, to prepare an electrochromic device for anti-glare mirror.

(Transmittance and haze ratio of electrochromic device)

The transmittance and haze ratio of the electrochromic evice thus prepared were measured under the coloring conditions of 2.5 V and 30 seconds. The results are shown in Table 1.

TABLE 1

OPERATION DURABILITY, TRANSMITTANCE AND HAZE RATIO OF ELECTROCHROMIC DEVICE

| Examples | Viologen type | Solvent | $HNO_3$ (wt.%) | Cycle number operable without residual coloring(times) | Transmittance(%) Befor coloring | Transmittance(%) After coloring | Haze ratio(%) Befor coloring | Haze ratio(%) After coloring |
|---|---|---|---|---|---|---|---|---|
| 1 | Heptyl viologen | 2-Methoxy-ethanol | 0.1 | 2,000~3,000 | 86.9 | 3.0 | 2.0 | 2.5 |
| 2 | Heptyl viologen | 2-Methoxy-ethanol | 1.0 | 700~ 800 | 84.5 | 3.6 | 2.2 | 2.8 |
| 3 | Heptyl viologen | 2-Methoxy-ethanol | 1.0 | 200~ 300 | 81.8 | 4.1 | 2.4 | 3.1 |
| 4 | Pentyl viologen | 2-Methoxy-ethanol | 1.0 | 1,500~2,000 | 85.3 | 3.0 | 2.0 | 2.5 |
| 5 | Heptyl viologen | 2-Methoxy-ethanol | 1.0 | 1,500~2,000 | 86.1 | 3.2 | 2.0 | 2.4 |
| 6 | Heptyl viologen | 2-Propoxy-ethanol | 1.0 | 1,500~2,000 | 83.7 | 4.0 | 2.5 | 2.7 |
| 7 | Heptyl viologen | 2-Butoxy-ethanol | 1.0 | 1,000~1,500 | 80.7 | 5.2 | 2.8 | 2.9 |
| 8 | Heptyl viologen | Diethylene glycol monoethyl ether | 1.0 | 1,200~1,500 | 82.5 | 4.6 | 2.7 | 2.8 |

(Operation durability of electrochromic device)

Initial current and voltage properties of the electrochromic device thus prepared were evaluated. The operation voltage was then 2.5 V, and the presence or absence of the

residual coloring during decoloring was visually observed, to determine the number of cycles at which the device could be operated without residual coloring. The results are shown in Table 1.

So as to improve the operation durability, herein, nitric acid was added as shown in Table 1 at the present evaluation.

(Reflectance of electrochromic device)

Heptyl viologen and nitric acid were added to 2-methoxyethanol, to prepare an electrochromic device (glass plate/electrolyte solution layer / ITO / glass plate / Ag mirror) poured with an electrolyte solution containing 10 wt % of heptyl viologen and 0.1 wt % of nitric acid. The reflectance of the device was measured. The relation between the operation voltage and the reflectance is shown in Table 2.

Table 2

| RELATION BETWEEN OPERATION VOLTAGE AND REFLECTANCE | |
|---|---|
| Operation voltage (V) | Reflectance (%) |
| 0 | 82.3 |
| 2.00 | 35.6 |
| 2.25 | 28.2 |
| 2.50 | 23.4 |
| 3.00 | 15.4 |

Example 2

An electrolyte solution was prepared in the same manner as in Example 1, except that 2-ethoxyethanol was used instead of 2-methoxyethanol as an organic solvent and the concentration of nitric acid was 1.0 wt %. Using the resulting electrolyte solution, an electrochromic device was prepared in the same manner as in Example 1. Table 1 shows the results of measurement of transmittance and haze ratio and the results of evaluation of operation durability.

Example 3

An electrolyte solution was prepared in the same manner as in Example 1, except that 2-phenylethanol was used as an organic solvent instead of 2-methoxyethanol and the concentration of nitric acid was 1.0 wt %. Using the resulting electrolyte solution, an electrochromic device was prepared in the same manner as in Example 1. Table 1 shows the results of measurement of transmittance and haze ratio and the results of evaluation of operation durability.

Example 4

An electrolyte solution was prepared in the same manner as in Example 1, except that pentyl viologen was used as an electrolyte instead of heptyl viologen and the concentration of nitric acid was 1.0 wt % . Using the resulting electrolyte solution, an electrochromic device was prepared. The results of evaluation are shown in Table 1.

Example 5

An electrolyte solution was prepared using heptyl viologen and 2-methoxyethanol in the same manner as in Example 1, except that the concentration of nitric acid was 1.0 wt %. Using the resulting electrolyte solution, an electrochromic device was prepared. The results of evaluation are shown in Table 1.

Examples 6-8

So as to prepare an electrochromic device, an electrolyte solution was firstly prepared in the same manner as in Example 1, except that 2-propoxyethanol (Example 6), 2-butoxyethanol (Example 7) or

diethylene glycol monoethyl ether (Example 8) was used as a solvent and the concentration of nitric acid was 1.0 wt %. The results of evaluation are shown in Table 1.

(Comparative Examples 1 to 3)

Heptyl viologen and nitric acid of special grade were added to propylene glycol, 1,3-butanediol and γ-butyrolactone to prepare electrolyte solutions each containing 10 wt % of heptyl viologen and 1 wt % of nitric acid. The transmittance, haze ratio and cycle number operable without residual coloring of the electrolyte solutions each were measured. The results are shown in Table 3.

TABLE 3

| TRANSMITTANCE AND HAZE RATIO OF ELECTROCHROMIC DEVICE | | | | | |
|---|---|---|---|---|---|
| Comparative Example | Solvent | Transmittance(%) | | Haze ratio(%) | |
| | | Before coloring | After coloring | Before coloring | After coloring |
| 1 | Propylene glycol | 65.3 | 36.2 | 17.0 | 58.0 |
| 2 | 1.3-Butanediol | 68.2 | 35.0 | 15.2 | 55.0 |
| 3 | γ-Butyrolactons | 70.2 | 33.1 | 10.5 | 55.2 |

Example 9

(Preparation of electrolyte solution)

2-Methoxyethanol (10 g) was weighed in a beaker, to which were added heptyl viologen and nitric acid (of special grade) for sufficient mixing and agitation with a stirrer, to prepare a viologen electrolyte solution of 20 wt % of heptyl viologen and 0.4 wt % of nitric acid of special grade.

(Fabrication of electrochromic device)

Two glass substrates of 40 mm square were prepared; on a single side of a glass substrate were sequentially deposited an ITO film of a 0.16 µm thickness and a NiO layer of a 0.5 µm thickness on the surface of the resulting ITO film by vacuum deposition. Alternatively, on a single side of the other glass substrate was deposited an ITO film of a 0.16 µm thickness in the same manner, and then, a silver mirror was arranged on the other side thereof. Between the two glass substrates placed so that their ITO and NiO sides might face each other were inserted spacers at an interval of 2.5 µm, and their circumference was sealed with a UV-curing adhesive to prepare a cell. Then, an opening was made at a single portion as an inlet of the solution.

Using a vacuum chamber, the entire cell was suctioned in vacuum below 500 Pa, and the cell was then immersed in an electrolyte solution to pour the solution into the cell at room temperature. After pouring, the opening was again sealed with the UV-curing adhesive. As has been described above, an electrochromic device of the following structure for anti-glare mirror was prepared.

<u>Structure of electrochromic device for anti-glare mirror</u>

Thickness of NiO layer; 0.5 µm

| Composition of electrolyte solution; | |
|---|---|
| heptyl viologen | 20 wt % |
| nitric acid | 0.4 wt % |
| 2-methoxyethanol | balance |

Sample size; 5 x 5 cm square

(Evaluation of operation of electrochromic device)

The operation durability of the electrochromic device of the aforementioned structure was evaluated under the following operation conditions.

Operation conditions

coloring; -1.5 V for 5 seconds
decoloring; + 1.0 V for 15 seconds

Evaluation methods

In the same manner as in Example 1, residual coloring was visually observed during decoloring. The results are shown in Table 5.

Example 10

To 2-phenylethanol were added heptyl viologen and nitric acid to prepare an electrolyte solution containing 5 wt % of heptyl viologen and 1 wt % of nitric acid. Then, an electrochromic device filled with the resulting electrolyte solution and including a NiO layer placed therein was prepared. In the same manner as in Example 9, the operation durability of the electrochromic device was evaluated, and the results are shown in Table 5.

Table 5

| CYCLE PROPERTIES OF ELECTROCHROMIC DEVICE | | |
|---|---|---|
| No. | Presence of NiO layer | Cycle number without residual coloring (times) |
| Example 9 (2-methoxyethanol) | Yes | 100,000 |
| Example 1 (2-methoxyethanol) | No | 3,000 |
| Example 10 (2-phenylethanol) | Yes | 5,000 |
| Example 3 (2-phenylethanol) | No | 300 |

As apparently shown in Table 5, the presence of the NiO layer between the electrolyte solution and the ITO electrode improves the cycle properties, namely the operation durability, of ECD.

Example 11

The reflectance of ECD using the NiO layer (glass / ITO / NiO / electrolyte solution / ITO / glass / silver mirror) was measured. The composition of the electrolyte solution was 20 wt % of heptyl viologen, 0.4 wt % of nitric acid, and 2-methoxyethanol. The relation between the operation voltage and the reflectance is shown below in Table 6.

Table 6

| RELATION BETWEEN OPERATION VOLTAGE AND REFLECTANCE | |
|---|---|
| Operation voltage (V) | Reflectance (%) |
| 0 | 87.3 |
| 1.50 | 35.6 |
| 2.00 | 30.2 |
| 2.50 | 28.4 |
| 3.00 | 15.4 |

Example 12

The ECDs prepared in Examples 9 and 1 were subjected to the stability test at low temperatures.

Testing method; devices were stored at -40 °C, and then, the temperature was raised to 15 °C once daily. Consequently, the devices were operated 100 times.

Evaluation method; residual coloring was visually observed during decoloring.

The device with the NiO layer of Example 9 (glass / ITO / NiO / electrolyte solution / ITO / glass / silver mirror) did not induce residual coloring over 20 days, on the other hand the device without any NiO layer of Example 1 (glass / ITO / electrolyte solution / ITO / glass / silver mirror) induced residual coloring within 10 days. This means that the device with the NiO layer has a more improved stability to operate at a low temparature as compared with the device without any NiO layer.

**Claims**

1. An electrochromic device comprising an electrolyte placed between a pair of electrodes, wherein the electrolyte is in the form of an electrolyte solution prepared by dissolving N, N'-substituted 4, 4'-bipyridyl represented by the following general formula [I];

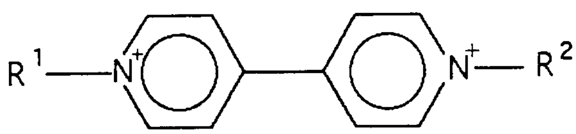

[I]

(wherein $R^1$ and $R^2$ may be the same or different and are at least one hydrocarbon-containing group, independently selected) in a solvent selected from the solvent group consisting of a solvent containing at least one compound represented by the general formula [II];

$HO(CH_2CH_2O)_nR^3$ [II]

(wherein $R^3$ is hydrogen atom or a hydrocarbon group; and n is an integer of 1 to 3) and a solvent containing at least one compound represented by the general formula [III];

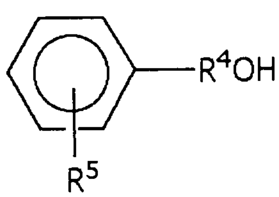

[III]

(wherein $R^4$ is $R^6$ or $OR^6$; $R^5$ is hydrogen atom, $R^6$ or $OR^6$; and $R^6$ is a linear alkylene group or a branched alkylene group), or wherein the electrolyte is in the form of an electrolyte film prepared by immersing and immobilizing the solution into a porous film.

2. An electrochromic device according to claim 1, wherein an electrolyte solution prepared by dissolving N, N'-substituted 4, 4'-bipyridyl in a mixture solvent of at least one compound represented by the general formula [II] or [III] with a solvent of a higher refractive index than that of the compound is immersed and immobilized into a porous film.

3. An electrochromic device according to claim 1, wherein $R^1$ and $R^2$ may be the same or different and are a linear alkyl group or a branched alkyl group with 1 to 8 carbon atoms.

4. An electrochromic device according to claim 3, wherein, $R^1$ and $R^2$ in the general formula [I] are the same and are phenyl group, benzyl group or such groups at an optional position substituted with halogen atom, cyano group or an alkyl group with 1 to 4 carbon atoms.

**5.** An electrochromic device according to claim 3, wherein $R^1$ and $R^2$ in the general formula [I] are heptyl group.

**6.** An electrochromic device according to claim 1, wherein the $R^3$ in the general formula [II] is hydrogen atom or a lower alkyl group.

**7.** An electrochromic device according to claim 6, wherein the compound represented by the general formula [II] $HO(CH_2CH_2O)_nR^3$ is at least one compound selected from the group consisting of 2-methoxyethanol and 2-ethoxyethanol.

**8.** An electrochromic device comprising an electrolyte placed between a pair of electrodes, wherein the electrolyte is in the form of an electrolyte solution prepared by dissolving N, N'-substituted 4, 4'-bipyridyl represented by the following general formula [I];

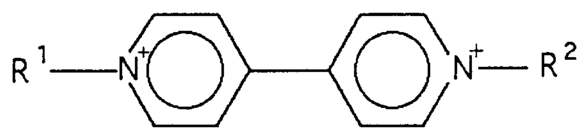

[I]

(wherein $R^1$ and $R^2$ may be the same or different and are at least one hydrocarbon-containing group, independently selected) in an organic solvent or wherein the electrolyte is in the form of an electrolyte film prepared by immersing and immobilizing the solution into a porous film, characterized in that an oxide layer of a transition metal selected from the group consisting of chromium, manganese, cobalt and nickel is placed between a single electrode of the aforementioned electrodes and the electrolyte.

**9.** An electrochromic device according to claim 8, wherein $R^1$ and $R^2$ are the same and are a linear alkyl group or a branched alkyl group with 1 to 8 carbon atoms in the general formula [I];

**10.** An electrochromic device according to claim 9, wherein $R^1$ and $R^2$ in the general formula [I] are the same and are phenyl group, benzyl group or such groups at an optional position substituted with halogen atom, cyano group or an alkyl group with 1 to 4 carbon atoms.

**11.** An electrochromic device according to claim 8, wherein the organic solvent contains at least one compound represented by the general formula [II];

$HO\ (CH_2CH_2O)\ _nR^3$ [II]

(wherein in the general formula [II], $R^3$ is hydrogen atom or a hydrocarbon group; and n is an integer of 1 to 3).

**12.** An electrochromic device according to claim 11, wherein $R^3$ in the general formula [II] $HO(CH_2CH_2O)_nR^3$ is hydrogen atom or a lower alkyl group.

**13.** An electrochromic device according to claim 12, wherein the compound represented by the general formula [II] $HO(CH_2CH_2O)_nR^3$ is at least one compound selected from the group consisting of 2-methoxyethanol and 2-ethoxyethanol.

**14.** An electrochromic device according to claim 8, wherein the organic solvent is at least one compound represented by the general formula [III];

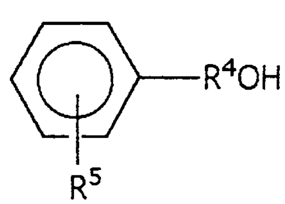

[III]

(wherein $R^4$ is $R^6$ or $OR^6$; $R^5$ is hydrogen atom, $R^6$ or $OR^6$; and $R^6$ is a linear alkylene group or a branched alkylene group).

**15.** An electrochromic device according to claim 14, wherein the organic solvent contains at least one compound represented by the general formula [III] wherein $R^5$ is hydrogen atom; and $R^4$ is at least one alkylene group selected from the group consisting of methylene, ethylene, propylene, butene, pentene and hexene.

**16.** An electrochromic device according to claim 15, wherein the organic solvent is 2-phenylethanol, 2-phenoxyethanol or the mixture thereof.

**17.** An electrochromic device according to any one of claims 1 to 16, wherein N'-substituted 4,4'-bipyridyl should be added at 1 wt% to 35 wt % to the total weight of the electrolyte solution.

**18.** An electrochromic device according to any one of claims 1 to 17, wherein the electrolyte solution contains an electrophilic reagent.

**19.** An electrochromic device according to claim 18, wherein the electrophilic reagent is a Louise acid, a Brønsted acid or a mineral acid.

**20.** An anti-glare mirror prepared by combining a mirror with an electro-chromic device according to any of claims 1 - 19.

Fig.1

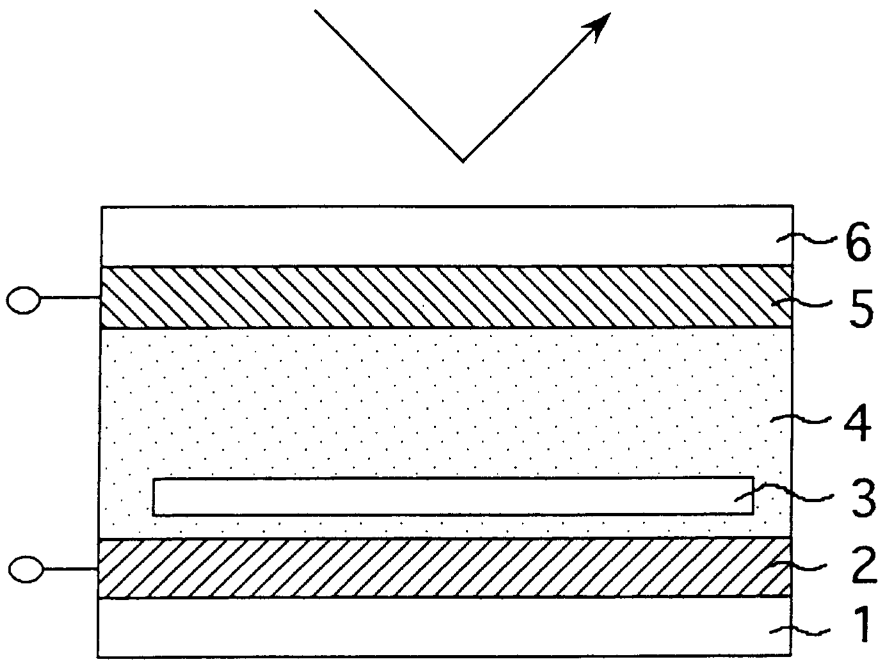


Fig.2

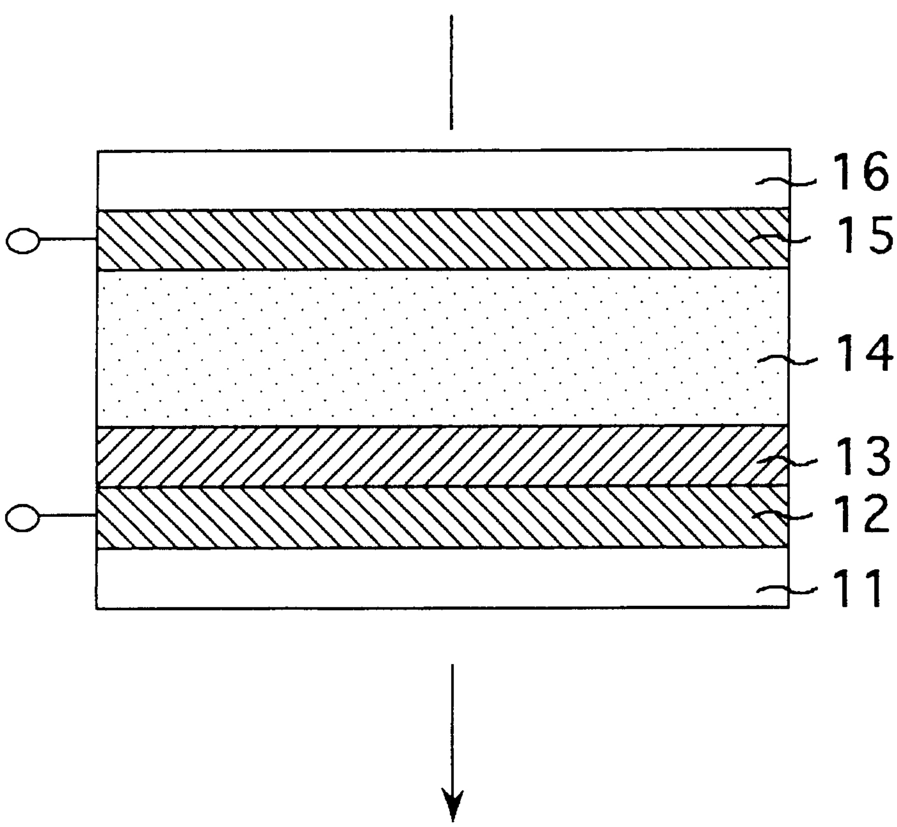

Fig.3

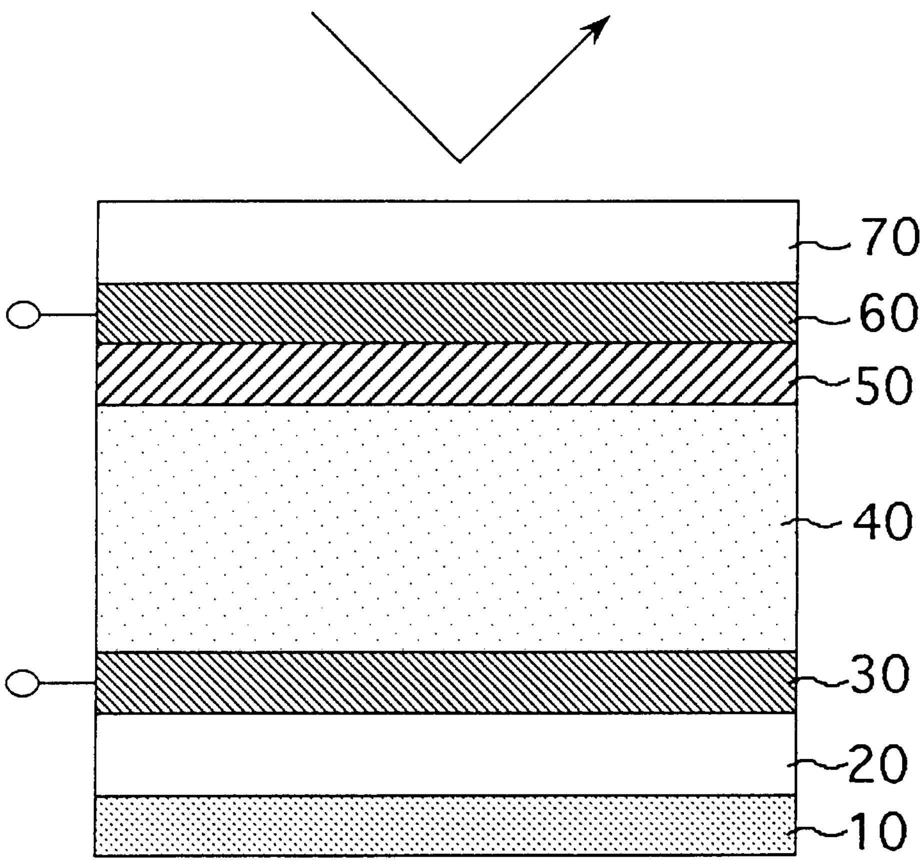

Fig.4